# EUROPÄISCHE PATENTANMELDUNG

(11) **EP 2 851 276 A1**
(43) Veröffentlichungstag der Anmeldung: **25.03.2015**
(21) Anmeldenummer: 13405114.3
(22) Anmeldetag: 23.09.2013
(51) Int. Cl.: B62D 51/06, B62D 51/04

(54) **Selbstfahrende, wenigstens einachsige, manuell lenkbare Arbeitsmaschine**

(71) Anmelder: Rapid Technic AG, 8956 Killwangen (CH)
(72) Erfinder: Bösch, Urs, CH-9500 Wil (CH)
(74) Vertreter: Fenner, Werner

(57) **Zusammenfassung**

Eine einachsige, selbstfahrende manuell lenkbare Arbeitsmaschine (1) zum Fortbewegen und/oder Antreiben von angebauten kommunalen oder landwirtschaftlichen Arbeitsgeräten (3), mit einem an einem Maschinen- oder Fahrgestell (4) aufgebauten Antriebsmotor (5) und einer von diesem hydraulisch oder mechanisch angetriebenen, beidseits des Maschinen- oder Fahrgestells (4) und quer zur Fortbewegungsrichtung abstehenden Fahrachse (7), die endseitig jeweils ein mit einer Antriebswelle verbundenes Rad (8) aufweist, und mit einer dem Antriebsmotor (5) zuschaltbaren Arbeitswelle für eine hydraulische oder mechanische Antriebvorrichtung des mit dem Maschinen- oder Fahrgestell (4) verbundenen Arbeitsgerätes (3), wobei das Maschinen- oder Fahrgestell (4) als einem Arbeitsgerät (3) zugeordnete Anbauvorrichtung (2) zum wahlweisen seitlichen Versetzen resp. Verschwenken aus einer Grund- oder Arbeitstellung quer zur Fortbewegungsrichtung resp. um eine zum Boden etwa senkrecht gerichtete Achse, und/oder zum Pendeln um eine etwa parallel zum Boden und in Fortbewegungsrichtung angeordnete Achse mit ihr gekoppelter Arbeitsgeräte (3) ausgebildet ist.

## Beschreibung

Die Erfindung betrifft eine selbstfahrende, wenigstens einachsige, manuell lenkbare Arbeitsmaschine zum Fortbewegen und/oder Antreiben von angebauten kommunalen oder landwirtschaftlichen Arbeitsgeräten, mit einem an einem Maschinen- oder Fahrgestell aufgebauten Antriebsmotor und einer von diesem hydraulisch oder mechanisch angetriebenen, beidseits des Maschinen- oder Fahrgestells und quer zur Fortbewegungsrichtung abstehenden Fahrachse, die endseitig jeweils ein mit einer Antriebswelle verbundenes Rad aufweist, und mit einer dem Antriebsmotor zuschaltbaren Arbeitswelle für eine hydraulische oder mechanische Antriebvorrichtung des mit dem Maschinen- oder Fahrgestell verbundenen Arbeitsgerätes.

Bei Arbeitsmaschinen mit einer Fahrachse und Führungsholmen zum manuellen Lenken auf Strassen, Wegen, Gärten, Parkanlagen oder im Gelände wie Wiesen und Äcker oder im Wald, sind Arbeitsgeräte, vorzugsweise an dem in Fortbewegungs- oder Arbeitsrichtung vorderen Ende angebaut, die aufgrund ihrer Eigenschaften zur Arbeitsweise um eine etwa senkrecht zum Boden gerichtete Achse aus einer Arbeitsgrundstellung nach einer Seite schwenk- und arretierbar sind oder solche Arbeitsgeräte, die um eine parallel zur Fortbewegungsrichtung verlaufende Achse pendelnd angeordnet oder arrertierbar sind, bekannt.

Die auch als Einachsgeräteträger bezeichneten Arbeitsmaschinen verfügen für pendelnd angebaute Arbeitsgeräte wie beispielsweise Messerbalken-, Spindel oder Sichelmäher oder Mulchgeräte über einen Geräteanschluss in Form eines Geräteanschlussstutzens, der das An- und Entkoppeln von Arbeitsgeräten werkzeuglos und ohne grossen Kraftaufwand sowie in kürzester Zeit erlaubt (Prospekt RP 200'000-2 02/13 der Rapid Technic AG).

Arbeitsgeräte wie beispielsweise Schneepflüge oder Kehrbürsten besitzen eine Schwenkvorrichtung, mit der sie in eine seitlich versetzte Arbeitslage verstell- und feststellbar sind.

Diese unterschiedlichen Anforderungen führen dazu, dass für einen schnellen Gerätewechsel zwei Arbeitsmaschinen vorhanden sind, die jeweils für Arbeitsgeräte zum seitlichen Verschwenken oder für ein Pendeln um eine in Fortbewegungsrichtung parallele Achse ausgerüstet sind, wobei sich die Pendelverbindung, wie schon erwähnt, an der Arbeitsmaschine und die zum seitlichen Verschwenken benutzte Vorrichtung an dem Arbeitsgerät befindet.

Diese mit Umtrieben verbundene Uneinheitlichkeit soll behoben werden.

Es hat sich an die Erfindung die Aufgabe gestellt, eine Einrichtung zu schaffen, die es erlaubt, an einer Arbeitsmaschine der eingangs beschriebenen Art sowohl seitlich verschwenkbare wie auch um eine in Fortbewegungsrichtung angeordnete Achse pendelnde Arbeitsgeräte anbauen zu können.

Erfindungsgemäss wurde die Aufgabe dadurch gelöst, dass das Maschinen- oder Fahrgestell als einem Arbeitsgerät zugeordnete Anbauvorrichtung zum wahlweisen seitlichen Versetzen resp. Verschwenken aus einer Grund- oder Arbeitsstellung quer zur Fortbewegungsrichtung resp. um eine zum Boden etwa senkrecht gerichtete Achse, und/oder zum Pendeln um eine etwa parallel zum Boden und in Fortbewegungsrichtung angeordnete Achse mit ihr gekoppelter Arbeitsgeräte ausgebildet ist. Die Erfindung geht damit einen zu einer Einheitskombination führenden neuen Weg. Dadurch kann die Anbauvorrichtung an den Arbeitsgeräten vereinfacht und kostengünstiger als bisher hergestellt werden.

Der Benutzer kann frei wählen, ob er an einer Arbeitsmaschine ein Arbeitsgeräte mit seitlicher Versetzbarkeit durch eine Lateralbewegung resp. seitlicher Verschwenkbarkeit und/oder zum Pendelnd einsetzen will.

Die Arbeitsgeräte können ohne auf einen seitlichen oder Pendeleinsatz achten zu müssen angebaut werden.

Selbstverständlich kann die Arbeitsmaschine einen vollhydraulischen, teilhydraulischen mit einer Zapfwelle oder mechanischen Antrieb aufweisen, um an die vorgeschlagene Anbauvorrichtung angebaut werden zu können.

Aufgrund der beschränkten Schwenkwinkel erweisen sich elastische/elastomere Lager zum Pendeln bzw. seitlichen Verschwenken der an die Anbauvorrichtung gekoppelten Arbeitsgeräte als vorteilhaft und sind von Verschleiss und Unterhalt kaum betroffen. Zudem wirken sie dämpfend beim Aufprall der Geräte an Hindernissen. Als elastische Lager können sog. Silentblocs mit einer elastomeren Einlage bzw. einer Gummimischung oder ähnlich wirkende metallische Federpakete verwendet werden.

Es erweist sich als vorteilhaft, wenn die Lager stehend angeordnet und gegen den eigenen Widerstand nach einer Seite sich neigend und zurück verformbar sind, womit eine Verwendung einfacher und anspruchsloser Bauteile erreicht wird.

Eine relative Stabilität an dem Traggestell resp. der Verbindung zu einem angebauten Arbeitsgerät kann vorzugsweise damit erreicht werden, wenn das Traggestell durch die Lager zwischen einer oberen und einer beabstandeten unteren Lagerplatte mit an dem Maschinen- oder Fahrgestell vorgesehenen Konsolen verbunden ist.

Die Lager können an den Lagerplatten resp. dem Traggestell befestigt sein.

Zweckmässig sind die Lager in einer senkrechten Ebene an den Lagerplatten angeordnet, sodass sie eine optimale Pendelbewegung und ein Verschwenken des Traggestells resp. der Anbauvorrichtung ermöglichen.

Zur Ausserbetriebs- oder in Betriebssetzung der Lager ist das Traggestell bzw. die Anbauvorrichtung mit einer manuell verstellbaren Arretiervorrichtung ausgerüstet.

Einfach erweist es sich, wenn die Lager durch die Arretiervorrichtung formschlüssig und dadurch mit geringem Aufwand in die Ausserbetriebsstellung versetzbar sind.

Vorzugsweise ist hierzu die Arretiervorrichtung durch ein den Lagern zustellbares Schaltorgan ausgebildet.

Die Arbeitsgeräte können durch eine an sich gegenüberliegenden Seiten des Traggestells befestigte Fanghakenkupplung mittels eigener Kupplungselemente der Arbeitsgeräte aufgenommen werden, wodurch eine einfache und zuverlässige Kupplungsart gewährleistet ist.

Es führt zur höheren Stabilität, wenn die sich gegenüberliegenden Seiten des Traggestells durch an einem Tragelement befestigte Abschlussplatten ausgebildet sind.

Hierzu kann die Fanghakenkupplung durch jeweils ein ein nach oben offenes Fangmaul aufweisendes Kupplungsteil ausgebildet sein, das an dem Traggestell befestigt ist.

Die Fanghakenkupplung zeichnet sich weiterhin dadurch aus, dass jedem Fangmaul jeweils ein an dem Kupplungsteil schwenkbarer Verriegelungshaken zugeordnet ist, der eine zuverlässige Bedienbarkeit und Koppelung der Arbeitsgeräte gestattet.

Zur seitlichen Verschwenkbarkeit der Arbeitsgeräte ist die obere Lagerplatte vorzugsweise als Einrastvorrichtung eines manuell um eine waagrechte Achse schwenkbaren Einrastnockens einer Schwenkeinrichtung ausgebildet.

Hierzu weist die Einrastvorrichtung einfachheitshalber kreissegmentartig in Abständen aneinandergereihte Ausnehmungen auf und der Einrastnocken ist an dem Traggestell ein- und ausrastbar angeordnet.

Der einfachheithalber bietet sich als gemeinsames Zentrum der kreissegmentartig aneinandergereihten Ausnehmungen für ein an der oberen Lagerplatte befestigtes elastisches Lager an.

Es erweist sich als vorteilhaft, wenn der Einrastnocken an dem Traggestell anhebbar gelagert ist, um eine Ein- oder Ausrastbewegung auf einfache Art ausführen zu können.

Zu diesem Zweck kann der Einrastnocken gegen eine Federkraft aus einer Ausnehmung der Einrastvorrichtung gehoben werden, wobei diese Bewegung beispielsweise mittels Seilzug auch von der Bedienungsseite der Arbeitsmaschine aus ausgeführt werden kann.

Die Schwenkbewegung kann mittels einem mit dem Traggestell verbundenen Betätigungsorgan, beispielsweise einem Stock manuell vorgenommen werden.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung einer erfindungsgemässen Anbauvorrichtung an einer einachsigen, manuell lenkbaren Arbeitsmaschine,
- Fig. 2: eine Seitenansicht einer Arbeitsmaschine mit der in Fig. 1 dargestellten Anbauvorrichtung mit einer gekoppelten, fahrbar abgestützten Kehrbürste,
- Fig. 3: eine Vorderansicht der in den Fig. 1 und 2 dargestellten Anbauvorrichtung in einer Grund- bzw. Arbeitsstellungstellung,
- Fig. 4: einen Querschnitt der Anbauvorrichtung nach der Linie IV - IV in Fig. 3,
- Fig. 5: eine Vorderansicht der Anbauvorrichtung in einer Pendelstellung,
- Fig. 6: eine Draufsicht der seitlich versetzten resp. verschwenkten Anbauvorrichtung,
- Fig. 7: eine Vorderansicht der gemäss Fig. 6 seitlich verschwenkten Anbauvorrichtung,
- Fig. 8: eine Vorderansicht der seitlich verschwenkten und in einer Pendelstellung dargestellten Anbauvorrichtung und
- Fig. 9: einen Querschnitt durch die Anbauvorrichtung nach der Linie IV - IV in Fig. 3.

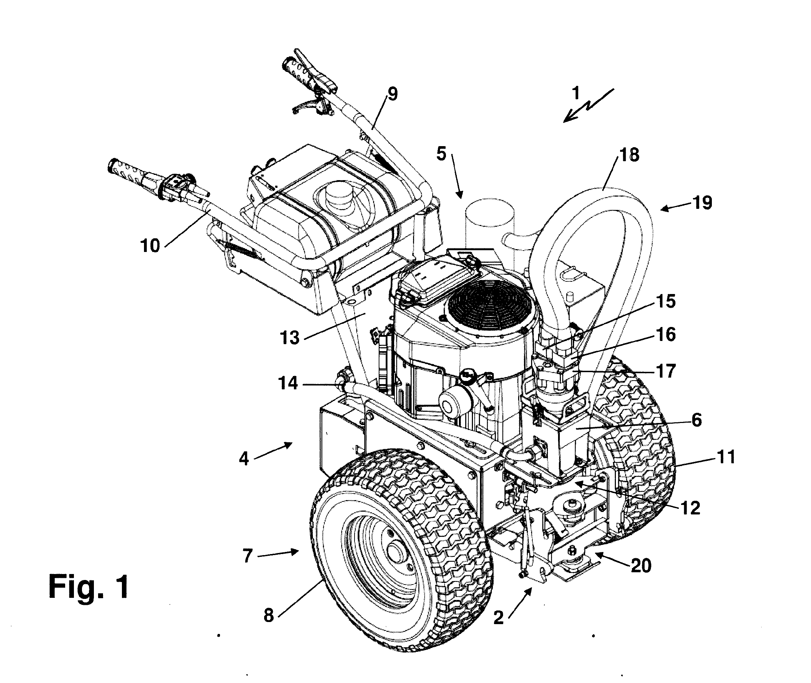

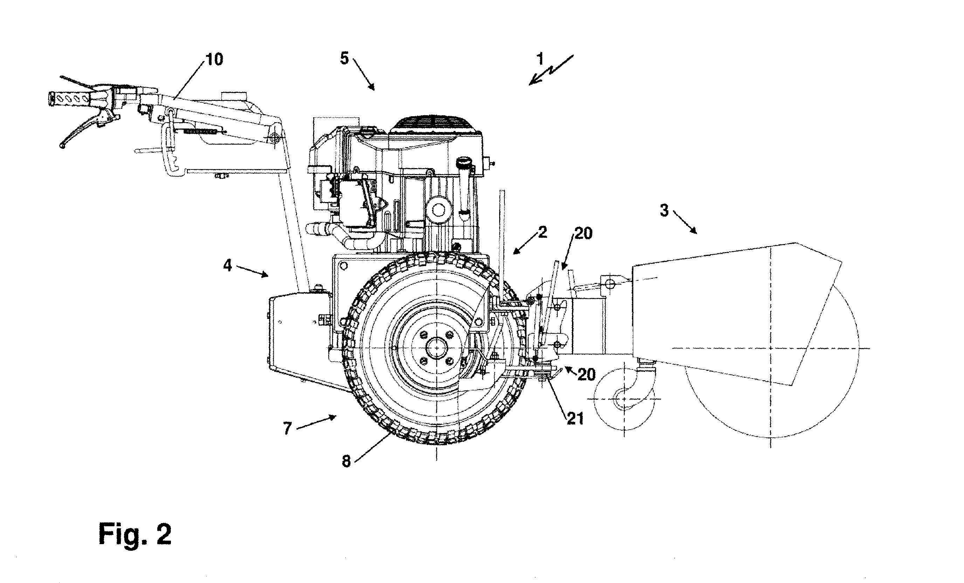

Die Fig. 1 und 2 zeigen vorerst jeweils eine selbstfahrende, einachsige Arbeitsmaschine 1 zum stossweisen oder gezogenen Fortbewegen und/oder zum Antreiben von an einer frontseitig befestigten Anbauvorrichtung 2 anbaubaren Arbeitsgeräten 3, beispielsweise eine in Fig. 2 dargestellte, fahrbar abgestützte Kehrbürste. Die Arbeitsmaschine 1 weist einen auf ein Maschinen- oder Fahrgestell 4 aufgebauten Antriebs- bzw. Verbrennungsmotor 5 auf, der eine stehende Antriebswelle aufweist, die gemäss Fig. 1 über ein Vorgelege (nicht ersichtlich) mit einer Hydraulikpumpe 6 antriebsverbunden ist.

Selbstverständlich kann ein Antriebsmotor mit liegender Antriebswelle, antriebsverbunden mit einer Zapfwelle, genauso mit der vorgeschlagenen Anbauvorrichtung 2 verwendet werden.

Die Anbauvorrichtung 2 eignet sich sowohl für einen vollhydraulischen, teilhydraulischen mit mechanischer Zapfwelle auch für einen mechanischen Antrieb zur Fortbewegung und zum Antrieb der Arbeitsgeräte.

Die Arbeitsmaschine 1 ist üblicherweise mit einem reversierbaren Antrieb ausgestattet, der eine zur Fortbewegungsrichtung entgegengesetzte Fahrrichtung erlaubt. Diese Umkehrung des Antriebs ist auch für den Betrieb der Arbeitsgeräte vorgesehen.

Die Arbeitsmaschine 1 weist eine mit dem Maschinen- oder Fahrgestell 4 verbundene Fahrachse 7 auf, die quer zur Fortbewegungsrichtung angeordnet ist und an den seitlichen Enden zum Fahren vorgesehene Räder 8 besitzt. An dem Maschinen- oder Fahrgestell 4 sind Führungsholme 9, 10 zur manuellen Lenkung der Arbeitsmaschine 1 resp. der Arbeitsgeräte durch eine Bedienungsperson befestigt, an deren hinterem, freistehenden Ende Handgriffe und Betätigungselemente für den Betrieb der Arbeitsmaschine 1 und der Arbeitsgeräte 3 befestigt sind.

Weiterhin sind in Fig. 1 und 2 ein zu dem Verbrennungsmotor 5 gehörender Betriebsstoff- oder Brennstofftank dargestellt.

Die für den Fahrantrieb vorgesehenen Hydraulikpumpe und Hydraulikmotoren oder mechanischen Getriebe sind nicht ersichtlich.

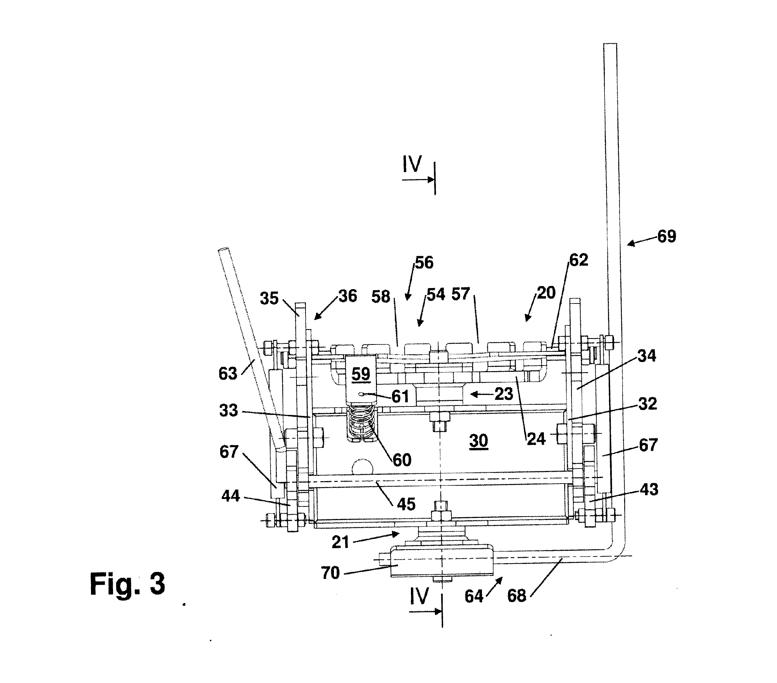

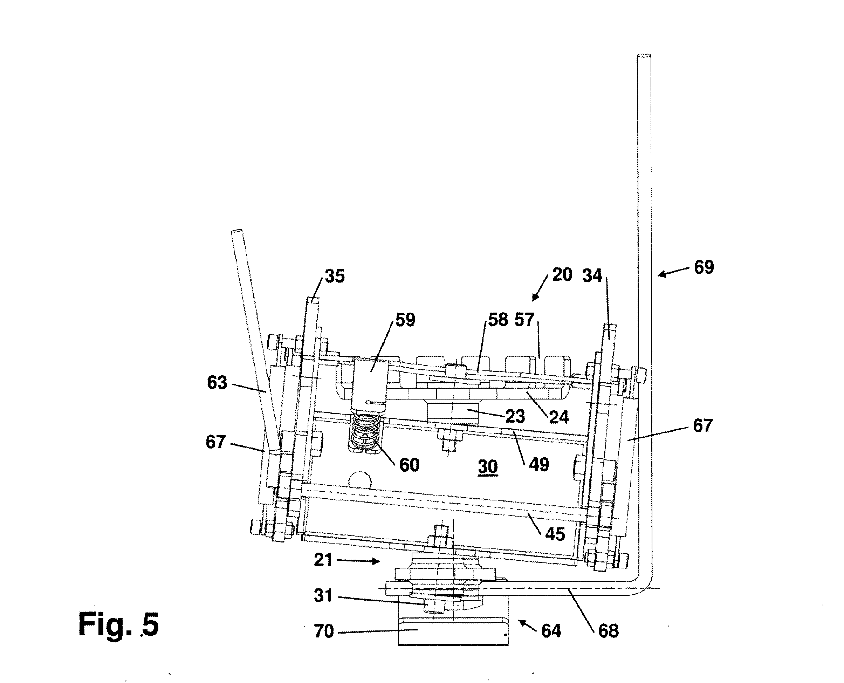

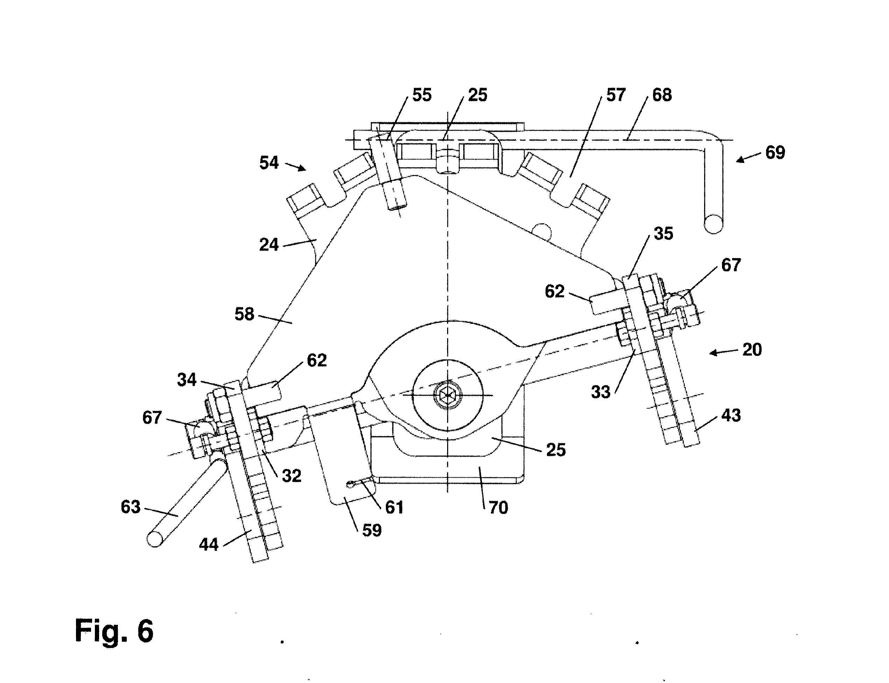

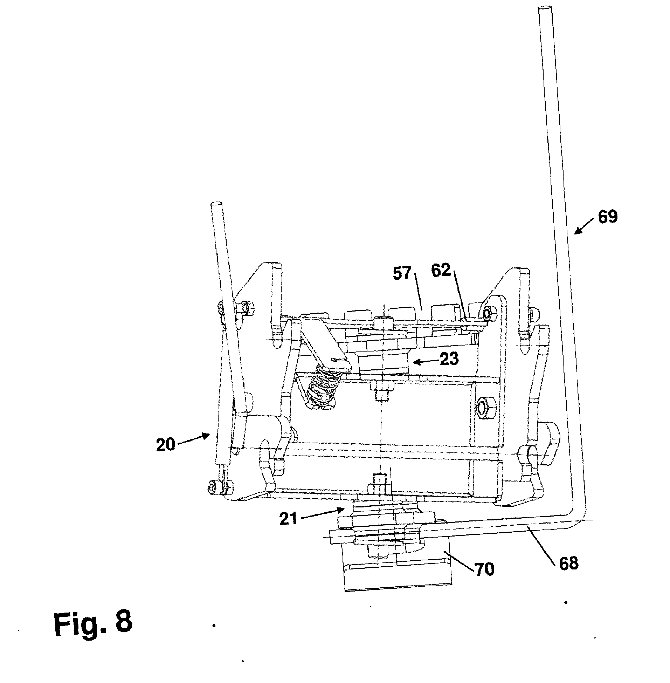

Frontseitig an dem Maschinen- oder Fahrgestell 4, auf einem Support 11 abgestützt, befindet sich die mit dem Antriebsmotor 5 der Arbeitsmaschine 1 antriebsverbundene, mittels Zwischenvorgelege 12 (Fig. 1) angetriebene Hydraulikpumpe 6 für den Antrieb der an die Anbauvorrichtung 2 gekoppelten Arbeitsgeräte 3. Die Hydraulikpumpe 6 ist in einen ein Kühlaggregat 13 aufweisenden Flüssigkeitskreislauf geschaltet, der aus Flüssigkeitsleitungsabschnitten besteht, von denen ein Abschnitt 14 ersichtlich ist. Die Leitungsverbindung der mit dem Antriebsmotor 5 mechanisch gekoppelten Hydraulikpumpe 6 führt ein Druckmedium über einen Kreislauf, bestehend aus einer mit der Hydraulikpumpe 6 verbundenen Vorlauf(druck)leitung 15 und einer an die Hydraulikpumpe 6 angeschlossenen Rückleitung 16, zwischen die ein mit einer mechanischen Antriebsvorrichtung eines Arbeitsgerätes 3 kuppelbarer Hydraulikmotor 17 geschaltet ist. Die Vorlauf(druck)leitung und die Rücklaufleitung 16 sind aus flexiblen Hochdruckschläuchen gebildet, die an den von der Hydraulikpumpe 6 abgewandten Enden an den in einer Ausserbetriebsposition sich befindenden Hydraulikmotor 17 angeschlossen sind. Vor- 15 und Rücklaufleitung 16 sind durch einen schlauchförmigen Mantel als Schlauchpaket 18 zusammengehalten und bilden eine flexible/mobile Arbeitswelle 19. In der Ausserbetriebsposition ist der Hydraulikmotor 17 mittels Spannverschluss 51 auf der Hydraulikpumpe 6 festgehalten. Vorschlagsgemäss ist nach den Fig. 1 bis 8 das Maschinen- oder Fahrgestell 4 als einem Arbeitsgerät 3 zugeordnete Anbauvorrichtung 2 zum wahlweisen Schwenken um eine etwa senkrecht zum Boden gerichtete Achse und/oder zum Pendeln um eine etwa parallel zum Boden und in Fortbewegungsrichtung angeordnete Achse mit ihr verbundener Arbeitsgeräte 3 ausgebildet. Die Anbauvorrichtung 2 weist ein zum Pendeln der Arbeitsgeräte 3 um eine in Fortbewegungsrichtung und etwa parallel zum Boden angeordnete Pendelachse sowie eine zum seitlichen Verschwenken der Arbeitsgeräte 3 um eine etwa senkrecht zum Boden stehende Achse ausgebildetes Traggestell 20 auf, das an elastischen bzw. elastomeren Lagern 21, 22, 23 angeordnet ist Fig. 1 bis 8).

Das Traggestell 20 besitzt eine obere 24 und eine beabstandete untere 25 Lagerplatte, die jeweils an von dem Maschinen- oder Fahrgestell 4 abstehenden Konsolen 26, 27, vorzugsweise mittels einer Schraubenverbindung 28 befestigt sind.

An den vorderen/freien Enden sind die obere und die untere Lagerplatte 24, 25 mit übereinander angeordneten elastischen Lagern 21, 23 versehen, die darstellungsgemäss mit den Lagerplatten 24, 25 verschweisst sind. Ein weiteres gleichartiges, stehendes zylindrisches Lager 22 befindet sich in der unteren Lagerplatte 25 im Abstand hinter dem Lager 21, das von einer Schraube 29 durchsetzt und mittels Mutter an der unteren Konsole 27 befestigt ist. Die Lager 21, 22, 23 sind in einer zu den Lagerplatten 26, 27 senkrechten Ebene angeordnet.

Die Lager 21, 22, 23 bestehen aus einem Rohrabschnitt 46, der einerseits zur Befestigung der Lager an den Lagerplatten 24, 25 dient und in den an den Enden jeweils eine Einlage 47, beispielsweise aus Gummi oder ähnliche Eigenschaften aufweisenden Materials eingesteckt ist, die eine metallische Buchse 48 umgibt, welche an einem oberen Flansch 49 eines des Tragelementes 30 über eine Unterlagsscheibe 50 mittels Schraubverbindung 52 festgeschraubt ist. Die gleiche Befestigungsanordnung ist für die Lager 21, 22 an der unteren Lagerplatte 25 vorgesehen.

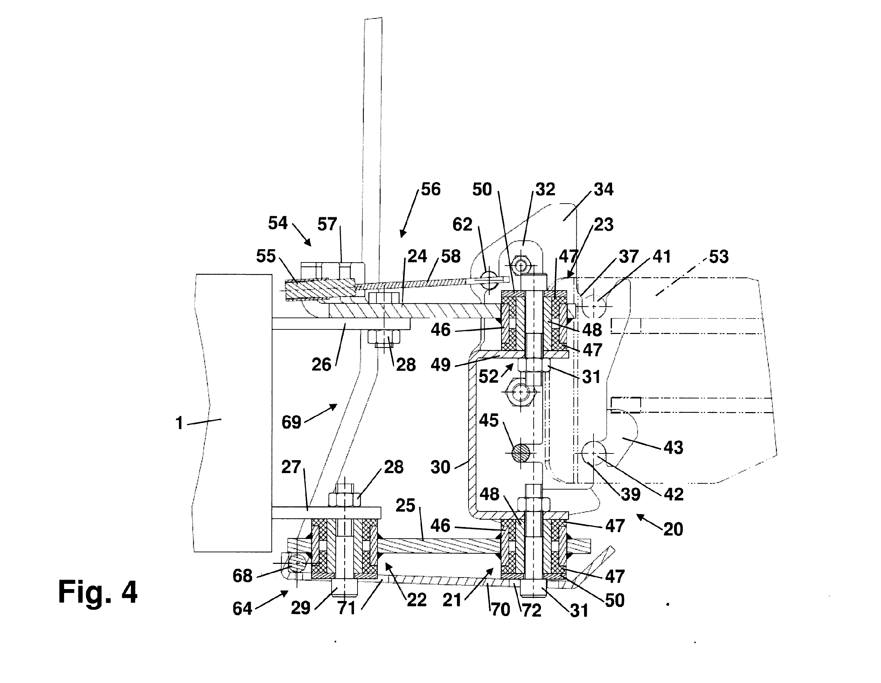

Das Traggestell 20 besteht weiterhin aus einem Tragelement 30, das gemäss Fig. 4 einen C-förmigen Querschnitt aufweist und mit den übereinander angeordneten Lagern 21, 23 durch eine Schrauben-Mutter-Verbindung 31 verbunden ist. An den seitlichen Öffnungen ist das Tragelement 30 mit Abschlussplatten 32, 33 ausgebildet, an deren Aussenseite jeweils ein Kupplungsteil 34, 35 einer Fanghakenkupplung 36 befestigt ist. Der Kupplungsteil 34, 35 weist ein nach oben offenes Fangmaul 37, 38 und eine Kupplungsöffnung 39, 40 auf, in die Kupplungsgegenelemente 41, 42 einer strichpunktiert dargestellten Kupplungsvorrichtung 53 eines Arbeitsgeräte 3 eingeführt und durch einen der Kupplungsöffnungen 39, 40 zugeordneten, schwenkbaren Verriegelungshaken 43, 44 endgültig gekoppelt werden. Letzterer befindet sich in Fig. 4 in der Schliessstellung, in der er durch eine Feder 47 gehalten wird. Beide Verriegelungshaken 43, 44 sind an einer gemeinsamen, die Kupplungsteile 34, 35 durchsetzenden Welle 45 befestigt. Die Betätigung der miteinander über Welle 45 verbundenen Verriegelungshaken 43, 44 erfolgt über einen an dem Verriegelungshaken 44 befestigten Handhebel 63, der die Verriegelungshaken 43, 44 über ein von der Anordnung der Schwenkachse 66 gebildeten Totpunkt in einer Offen- oder einer Schliessstellung hält, wozu jeweils eine an den Kupplungsteilen 34, 35 einerseits und dem Verriegelungshaken 43, 44 andererseits eingespannte Zugfeder 67 vorgesehen bzw. eingespannt ist.

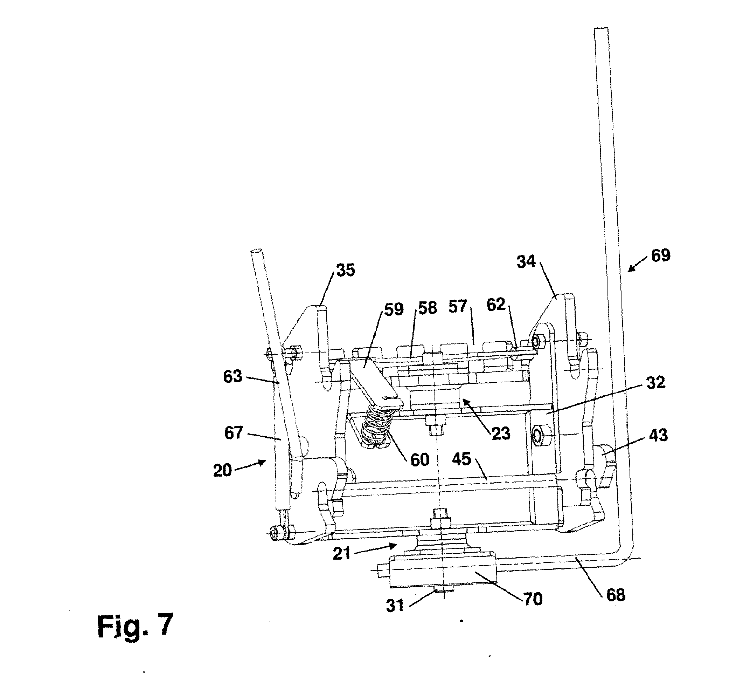

Die obere Lagerplatte 24 des Traggestells 20, die an der oberen Konsole 26 festgeschraubt ist, ist als Einrastvorrichtung 54 eines um eine senkrechte Achse schwenkbaren Einrastnockens 55 einer für die Arbeitsgeräte vorgesehenen Schwenkeinrichtung 56 ausgebildet. Die Einrastvorrichtung 54 weist kreissegmentartig in Abständen aneinandergereihte Ausnehmungen 57 auf und die zur Befestigung des Einrastnockens 55 benutzte (dreieckförmige) Platte 58 (siehe Fig. 7) ist an den Kupplungsteilen 34, 35 der Fanghakenkupplung 36 oder den überstehenden Abschlussplatten 32, 33 des Traggestells 20 schwenkend anhebbar und absenkbar gelagert. An der Platte 58 befestigte Gewindebolzen 62 vermitteln die Schwenklagerung des Einrastnockens 55 an dem Tragelement 30 bzw. den Kupplungsteilen 34, 35. An der Platte 58 ist ein abstehender Hebel 59 befestigt, der an einer Druckfeder 60 abgestützt ist und mittels nicht dargestelltem, in Schlitz 61 eingehängtem Zugseil gegen die Federkraft zum Ausheben des Einrastnockens 55 aus einer Ausnehmung 57 betätigbar ist.

Die seitliche Verstellung eines Arbeitsgerätes 3 gegenüber der Arbeitsmaschine 1 kann durch eine nicht dargestellte bekannte Verstellvorrichtung nach dem Ausheben des Einrastnockens 55 aus einer Ausnehmung 57 der Einrastvorrichtung 54 erfolgen, oder durch eine seitliche Ruckbewegung der Arbeitsmaschine 1 an den Führungsholmen 9, 10 durch eine Bedienungsperson, nachdem der Einrastnocken 55-wie oben beschrieben- aus einer Ausnehmung 57 der Einrastvorrichtung 54 ausgehoben ist.

Zur Benutzung der Pendelbewegungen über die Lager 21, 22, 23 resp. der seitlichen Ausgleichsbewegungen des Traggestells 20 aufgrund von quer gerichteten Bodenunebenheiten oder seitlichem Gefälle und deren Ausserbetriebssetzung verfügt die Anbauvorrichtung über eine auf das Traggestell 20 wirkende Arretiervorrichtung 64, die von Hand ein- und ausschaltbar ausgebildet ist.

Hierzu ist ein an einer Schaltwelle 68 eines an dem Traggestell 20 schwenkbar gelagerten Schalthebels 69 befestigtes Schaltorgan 70 vorgesehen, das die Lager 21, 22, 23 wahlweise zur Pendelbewegung freistellt oder arretiert bzw. ausser Betrieb setzt. Das in Fortbewegungsrichtung bzw. in Längsrichtung der Arbeitsmaschine 1 unterhalb der unteren Lagerplatte 25 sich erstreckende Schaltorgan 70 weist der Anordnung der Lager 21, 22 entsprechende bzw. diesen zugeordnete Durchtrittsöffnungen 71, 72 auf, in die die Lager 21, 22 bei Ausserbetriebssetzung der Pendelbewegungen hineinragen bzw. die Lager bewegungslos arretiert werden. Die Durchtrittsöffnungen 71, 72 können so ausgebildet sein, dass sie wie in Fig. 4 dargestellt, das Lager 22 resp. den Schraubenkopf der Schrauben-Mutter-Verbindung von Lager 21 umgeben bzw. erfassen. Zur Freistellung der Pendelbewegungen wird Schalthebel 69 im Uhrzeigersinn verstellt, sodass Schaltorgan 70 unwirksam wird.

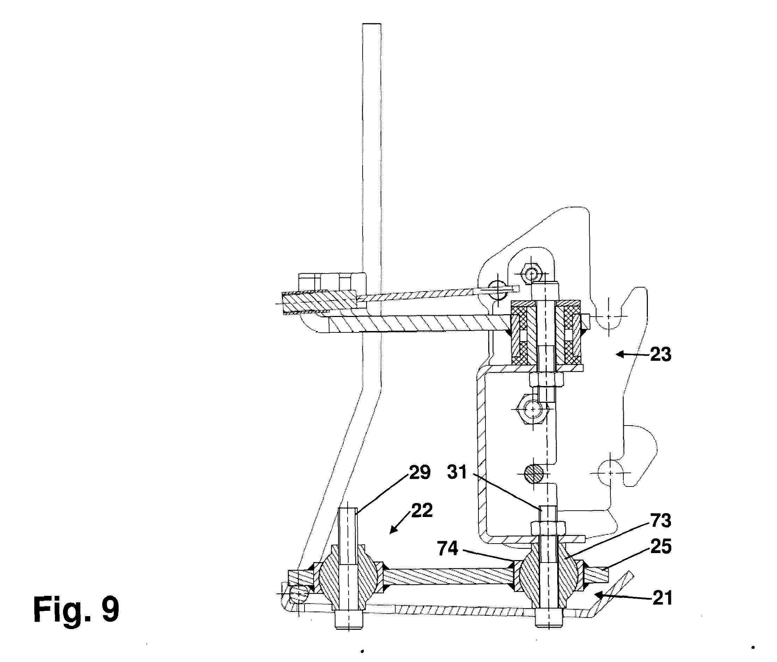

Fig. 9 zeigt eine Ausführung der Anbauvorrichtung 2, bei welcher die an der unteren Lagerplatte 25 befestigten Lager 21, 22, 23 als Kugelaugen resp. sphärische Lager, wie sie beispielsweise an der Dreipunktanhängevorrichtung (Unterlenker) eines Traktors vorkommen, ausgebildet sind. Diese Kugelaugen bestehen aus sphärischen Gleitkörpern 73 in einer Lagerschale 74, die mit der unteren Lagerplatte 25 verbunden ist, die ihrerseits mit der Konsole 27 und dem Tragelement 30 verschraubt ist.

## Patentansprüche

1. Selbstfahrende, wenigstens einachsige, manuell lenkbare Arbeitsmaschine (1) zum Fortbewegen und/oder Antreiben von angebauten kommunalen oder landwirtschaftlichen Arbeitsgeräten (3), mit einem an einem Maschinen- oder Fahrgestell (4) aufgebauten Antriebsmotor (5) und einer von diesem hydraulisch oder mechanisch angetriebenen, beidseits des Maschinen- oder Fahrgestells (4) und quer zur Fortbewegungsrichtung abstehenden Fahrachse (7), die endseitig jeweils ein mit einer Antriebswelle verbundenes Rad (8) aufweist, und mit einer dem Antriebsmotor (5) zuschaltbaren Arbeitswelle für eine hydraulische oder mechanische Antriebvorrichtung des mit dem Maschinen- oder Fahrgestell (4) verbundenen Arbeitsgerätes (3), **dadurch gekennzeichnet, dass** das Maschinen- oder Fahrgestell (4) als einem Arbeitsgerät (3) zugeordnete Anbauvorrichtung (2) zum wahlweisen seitlichen Versetzen resp. Verschwenken aus einer Grund- oder Arbeitsteilung quer zur Fortbewegungsrichtung resp. um eine zum Boden etwa senkrecht gerichtete Achse, und/oder zum Pendeln um eine etwa parallel zum Boden und in Fortbewegungsrichtung angeordnete Achse mit ihr gekoppelter Arbeitsgeräte (3) ausgebildet ist.

2. Maschine nach Anspruch 1, **dadurch gekennzeichnet, dass** die Anbauvorrichtung (2) ein zum Pendeln bzw. zum seitlichen Verschwenken der Arbeitsgeräte (3) ausgebildetes Traggestell (20) aufweist, das in elastischen bzw. elastomeren und/oder sphären Lagern (21, 22, 23) angeordnet ist.

3. Maschine nach Anspruch 2, **dadurch gekennzeichnet, dass** wenigstens ein Teil der Lager (21, 22, 23) durch sphärische Lager resp. Kugelaugen (73, 74) ausgebildet sind.

4. Maschine nach Anspruch 2 oder 3, **dadurch gekennzeichnet, dass** die Lager (21, 22, 23) stehend angeordnet und gegen den eigenen Widerstand nach einer Seite und zurück verformbar sind.

5. Maschine nach einem der Ansprüche 2 oder 4, **dadurch gekennzeichnet, dass** die Lager (21, 22, 23) an dem Traggestell (20) an einer oberen und einer beabstandeten unteren Lagerplatte (24, 25), mit an dem Maschinen- oder Fahrgestell (4) vorgesehenen Konsolen (26, 27) verbunden sind.

6. Maschine nach einem der Ansprüche 2 bis 5, **dadurch gekennzeichnet, dass** die Lager (21, 22, 23) an den Lagerplatten (24, 25) befestigt sind.

7. Maschine nach einem der Ansprüche 2 bis 6, **dadurch gekennzeichnet, dass** die Lager (21, 22, 23) in einer senkrechten Ebene an den Lagerplatten (24, 25) befestigt sind.

8. Maschine nach einem der Ansprüche 2 bis 7, **dadurch gekennzeichnet, dass** dem Traggestell (4) eine zur Ausserbetriebssetzung der Lager (21, 22, 23) bestimmte, manuell betätigbare Arretiervorrichtung (64) zugeordnet ist.

9. Maschine nach Anspruch 8, **dadurch gekennzeichnet, dass** die Lager (21, 22, 23) durch die Arretiervorrichtung (64) formschlüssig in Ausserbetriebsstellung versetzbar sind.

10. Maschine nach Anspruch 6 oder 9, **dadurch gekennzeichnet, dass** die Arretiervorrichtung (64) durch ein den Lagern (21, 22) zustellbares Schaltorgan (70) ausgebildet ist.

11. Maschine nach einem der Ansprüche 2 bis 10, **dadurch gekennzeichnet, dass** an gegenüberliegenden Seiten des Traggestells (20) eine Fanghakenkupplung (36) zur Aufnahme der Kupplungsgegenelemente (41, 42) der Arbeitsgeräte (3) befestigt ist.

12. Maschine nach Anspruch 11, **dadurch gekennzeichnet, dass** die sich gegenüberliegenden Seiten des Traggestells (20) durch an einem Tragelement (30) befestigte Abschlussplatten (32, 33) ausgebildet sind.

13. Maschine nach Anspruch 8, **dadurch gekennzeichnet, dass** die Fanghakenkupplung (36) durch jeweils ein ein Fangmaul (37, 38) aufweisendes Kupplungsteil (34, 35) an dem Traggestell (20) befestigt ist.

14. Maschine nach Anspruch 13, **dadurch gekennzeichnet, dass** jedem Fangmaul (37, 38) jeweils ein an dem Kupplungsteil (34, 35) schwenkbarer Verriegelungshaken (43, 44) zugeordnet ist.

15. Maschine nach Anspruch 4 oder 5, **dadurch gekennzeichnet, dass** die obere Lagerplatte (24) des Traggestells (20) als Einrastvorrichtung (54) eines manuell um eine waagrechte Achse schwenkbaren Einrastnockens (55) einer Schwenkeinrichtung (56) für die Anbaugeräte (3) ausgebildet ist.

16. Maschine nach Anspruch 15, **dadurch gekennzeichnet, dass** die Einrastvorrichtung (54) kreissegmentartig in Abständen aneinandergereihte Ausnehmungen (57) aufweist und dass der Einrastnocken (55) in die Ausnehmungen (57) einlegbar und aus diesen aushebbar mit dem Traggestell (20) verbunden ist.

17. Maschine nach Anspruch 15 oder 16, **dadurch gekennzeichnet, dass** das Zentrum der kreissegmentartig in Abständen aneinandergereihten Ausnehmungen (57) ein an der oberen Lagerplatte (24) befestigtes elastisches Lager (23) bildet.

18. Maschine nach Anspruch 17, **dadurch gekennzeichnet, dass** der Einrastnocken (55) für die Ein- und Ausrastbewegung an dem Traggestell (20) anhebbar gelagert ist.

19. Maschine nacheinem der Ansprüche 15 bis 17, **dadurch gekennzeichnet, dass** der Einrastnocken (55) gegen die Kraft einer Feder (60) aus einer Ausnehmung (57) ausrastbar ist.

20. Maschine nach einem der Ansprüche 15 bis 18, **dadurch gekennzeichnet, dass** die Schwenkeinrichtung (56) mittels einem mit dem Traggestell (20) verbundenen Betätigungsorgan manuell verstellbar ausgebildet ist.
